# EUROPÄISCHE PATENTSCHRIFT

(11) **EP 3 230 119 B1**
(45) Veröffentlichungstag und Bekanntmachung des Hinweises auf die Patenterteilung: **20.05.2020**
(21) Anmeldenummer: 15801176.7
(22) Anmeldetag: 27.11.2015
(51) Int. Cl.: B60N 2/07, B60N 2/08

(54) **LÄNGSEINSTELLER FÜR EINEN FAHRZEUGSITZ UND FAHRZEUGSITZ**
LONGITUDINAL ADJUSTER FOR A VEHICLE SEAT AND VEHICLE SEAT
DISPOSITIF DE RÉGLAGE LONGITUDINAL D'UN SIÈGE DE VÉHICULE ET SIÈGE DE VÉHICULE

(30) Priorität: 12.12.2014 DE 102014225707
(43) Veröffentlichungstag der Anmeldung: 18.10.2017
(73) Patentinhaber: Adient Luxembourg Holding S.à r.l., 1855 Luxembourg (LU)
(72) Erfinder: SPRENGER, Erik, 42929 Wermelskirchen (DE)
(74) Vertreter: Finger, Catrin
(86) Internationale Anmeldenummer: PCT/EP2015/077877
(87) Internationale Veröffentlichungsnummer: WO 2016/091614

(56) Entgegenhaltungen:
- US-A- 5 524 504
- US-A1- 2012 145 866

## Beschreibung

Die Erfindung betrifft einen Längseinsteller für einen Fahrzeugsitz. Weiterhin betrifft die Erfindung einen Fahrzeugsitz, umfassend einen solchen Längseinsteller.

EP 0 752 338 B1, FR 2 767 096 B1 und EP 0 904 977 B1 beschreiben jeweils einen Längsversteller, der zumindest eine Unterschiene und zumindest eine gegenüber der Unterschiene in Längsrichtung verschiebbare Oberschiene sowie ein an der Oberschiene angeordnetes elastisches Element umfasst. Das elastische Element ist zur Verriegelung der Oberschiene mit der Unterschiene vorgesehen und insbesondere an der Oberschiene mittels einer Nietverbindung angeordnet.

Aus US 5,524,504 A ist eine Vorrichtung zur Längsverstellung eines Sitzes eines Motorfahrzeugs bekannt.

Aus US 2012/0145866 A1 ist eine Vorrichtung zum Verschieben eines Sitzes bekannt, wobei die Vorrichtung eine untere Schiene und eine obere Schiene umfasst.

Aufgabe der vorliegenden Erfindung ist es, einen gegenüber dem Stand der Technik verbesserten Längseinsteller für einen Fahrzeugsitz und einen verbesserten Fahrzeugsitz anzugeben.

Hinsichtlich des Längseinstellers wird die Aufgabe erfindungsgemäß mit den in Anspruch 1 angegebenen Merkmalen gelöst. Hinsichtlich des Fahrzeugsitzes wird die Aufgabe erfindungsgemäß mit den in Anspruch 12 angegebenen Merkmalen gelöst.

Vorteilhafte Ausgestaltungen der Erfindung sind Gegenstand der Unteransprüche.

Ein erfindungsgemäßer Längseinsteller für einen Fahrzeugsitz umfasst mindestens ein Schienenpaar, umfassend eine Unterschiene und eine relativ zur Unterschiene längs verschiebbare Oberschiene, zumindest eine Verriegelungseinheit zum Arretieren der Oberschiene, und zumindest einem Betätigungselement zum Lösen der Arretierung der Oberschiene. Die Verriegelungseinheit umfasst zumindest ein Verriegelungselement und zumindest ein Federelement, die miteinander in Wirkeingriff stehen, wobei das Federelement mit der Oberschiene mittels einer Steck-Rastverbindung form- und kraftschlüssig verbunden ist, und wobei das Federelement das Betätigungselement und das Verriegelungselement mit einer Vorspannkraft beaufschlagt.

Die Steck-Rastverbindung des Federelements mit der verschiebbaren Oberschiene ermöglicht eine gegenüber dem Stand der Technik verbesserte mechanische Stabilität des Längseinstellers, da eine Umformung der Oberschiene zur Verbindung mit dem Federelement und ein möglicherweise daraus resultierender Verzug der Bauteile vermieden ist. Dadurch besteht zudem die Möglichkeit, die Oberschiene aus einem hochfesten Material herzustellen. Eine mechanische Stabilität der Steck-Rastverbindung wird durch die erzeugten Vorspannkräfte auf das Betätigungselement und das Verriegelungselement sichergestellt.

Gemäß einer Ausgestaltung der Erfindung weist das Federelement zumindest eine Rastnase und zumindest eine Rastlasche auf, die zur Ausbildung der Steck-Rastverbindung in korrespondierenden Aussparungen der Oberschiene anordenbar sind.

Dabei ist die Rastnase in eine korrespondierende Aussparung einsteckbar und die Rastlasche ist in einer anderen korrespondierenden Aussparung verrastbar.

Gemäß einer weiteren Ausgestaltung der Erfindung weist die mit der Rastnase korrespondierende Aussparung zwei Bereiche mit in Richtung einer Querachse verschiedenen Breiten auf, wobei die Rastnase zwei Abschnitte mit in Richtung einer Querachse verschiedenen Breiten aufweist.

Zweckmäßigerweise korrespondieren dabei jeweils eine Breite eines Bereichs der Aussparung mit einer Breite eines Abschnitts der Rastnase. Damit ist die Rastnase mit einem Abschnitt durch einen Bereich der Aussparung hindurchführbar und kann mit dem anderen Abschnitt in dem anderen Bereich der Aussparung zur Ausbildung der Steck-Rastverbindung angeordnet werden.

Zur Erzeugung der Vorspannkräfte weist das Federelement zwei Federarme auf, wobei einer der Federarme das Betätigungselement mit einer Vorspannkraft beaufschlagt und der andere Federarm das Verriegelungselement mit einer Vorspannkraft beaufschlagt.

Das Federelement ist dabei vorzugsweise als eine Blattfeder ausgebildet, wobei die Rastnase und die Rastlasche an einem stirnseitigen Ende und die Federarme an einem gegenüberliegenden stirnseitigen Ende des Federelements angeordnet sind. Dadurch, dass die Federarme an dem einen stirnseitigen Ende des Federelements Vorspannkräfte erzeugen, wird das Federelement derart vorgespannt, dass das Federelement mit der Rastnase und der Rastlasche sicher in der Oberschiene verrastet bleibt.

Zur Lagefixierung des Betätigungselements zumindest in Richtung einer Längsachse, welche hierbei parallel zu einer Fahrtrichtung verläuft, umfasst das Betätigungselement mindestens einen Anschlag, wobei einer der Federarme in Wirkeingriff mit dem Anschlag steht. Vorzugsweise steht hierbei der Federarm in Wirkeingriff mit dem Anschlag, welcher das Betätigungselement mit einer Vorspannkraft beaufschlagt.

Gemäß einer weiteren Ausgestaltung der Erfindung ist das Betätigungselement schwenkbar in einer Durchgangsöffnung des Federelements gelagert. Das Betätigungselement ist hierbei in Form einer Wippe ausgebildet, wobei beim Schwenken des Betätigungselements endseitige Abschnitte des Betätigungselements in entgegengesetzte Richtungen bewegt werden.

Ein Betätigungsende des Betätigungselements ist dabei zwischen dem Verriegelungselement und der Oberschiene angeordnet. Hierbei wird bei einem Betätigen des Betätigungselements, z. B. eine Schwenkbewegung in Richtung einer Hochachse nach oben, das Betätigungsende in Richtung der Hochachse nach unten und damit in Richtung der Unterschiene bewegt. Da das Betätigungsende zwischen dem Verriegelungselement und der Oberschiene angeordnet ist, wird das Verriegelungselement von der Oberschiene weg bewegt und der Längseinsteller entriegelt.

Eine Möglichkeit zur Ausgestaltung des Verriegelungselements ist dabei ein am Verriegelungselement angeordneter Führungszapfen, welcher dem Verriegelungselement als Führungselement und zur Stabilisierung einer Bewegung dient, wenn das Verriegelungselement von einer Verriegelungsposition in eine Entriegelungsposition und wieder zurück bewegt wird.

Es ist weiterhin ein Fahrzeugsitz vorgesehen, welcher zumindest einen erfindungsgemäßen Längseinsteller umfasst.

Der Fahrzeugsitz weist dabei eine gegenüber dem Stand der Technik verbesserte Schnittstelle zur Befestigung eines mit einem Verriegelungselement in Wirkverbindung stehenden Federelements auf.

Ausführungsbeispiele der Erfindung werden anhand von Zeichnungen näher erläutert. Dabei zeigen:
- Figur 1: schematisch in Seitenansicht einen Fahrzeugsitz mit einem Längseinsteller,
- Figur 2: schematisch in perspektivischer, teiltransparenter Ansicht ein Ausführungsbeispiel eines Längseinstellers, umfassend ein Schienenpaar und eine Verriegelungseinheit,
- Figur 3: schematisch in Seitenansicht eine Schnittdarstellung des Längseinstellers in einem unbetätigten Zustand,
- Figur 4: schematisch in Seitenansicht eine Schnittdarstellung des Längseinstellers in einem betätigtem Zustand,
- Figur 5: schematisch in perspektivischer, teiltransparenter Ansicht eine Oberschiene mit einer innen liegenden Verriegelung,
- Figur 6: schematisch in Explosionsdarstellung die Oberschiene und ein Federelement vor einer Montage,
- Figur 7: schematisch in perspektivischer, teiltransparenter Ansicht die Oberschiene während der Montage des Längseinstellers, wobei das Federelement in eine Aussparung der Oberschiene eingeführt ist und
- Figur 8: schematisch in perspektivischer, teiltransparenter Ansicht die Oberschiene nach der Montage, wobei das Federelement in einer Aussparung der Oberschiene verrastet ist.

Einander entsprechende Teile sind in allen Figuren mit den gleichen Bezugszeichen versehen.

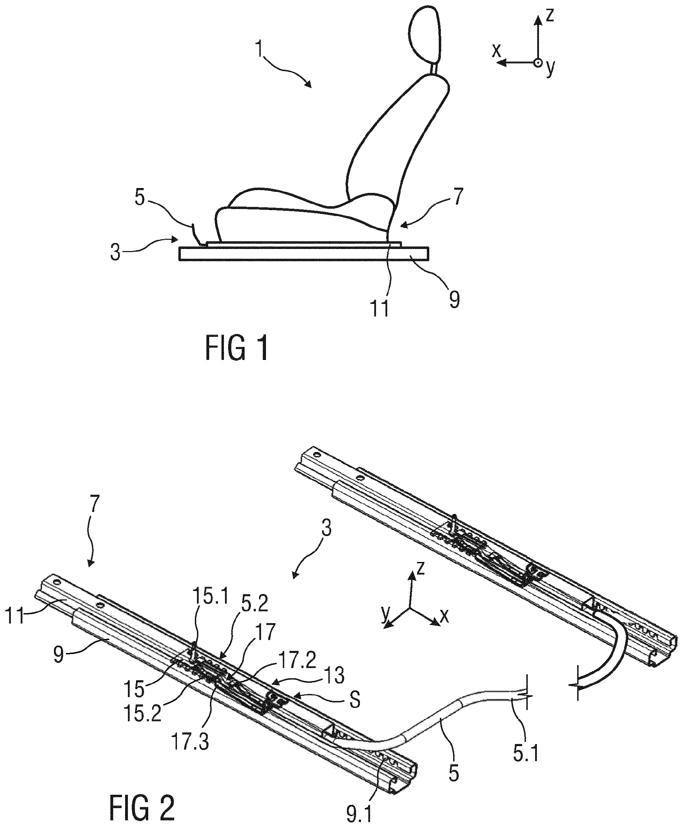

Figur 1 zeigt in Seitenansicht einen Fahrzeugsitz 1 eines nicht näher dargestellten Fahrzeugs.

Eine Anordnung des Fahrzeugsitzes 1 im Fahrzeug wird dabei anhand des nachfolgend verwendeten Koordinatensystems definiert, umfassend eine einer Hochrichtung des Fahrzeugs zugeordneten Hochachse z, eine einer Längsrichtung des Fahrzeugs zugeordneten Längsachse x und eine einer Querrichtung des Fahrzeugs zugeordneten Querachse y.

Der Fahrzeugsitz 1 weist einen erfindungsgemäßen Längseinsteller 3 und ein Betätigungselement 5 auf. Bei einer Betätigung des Betätigungselements 5 ist eine Verschiebung des Fahrzeugsitzes 1 relativ zum Fahrzeug entlang der Längsachse x möglich.

Der Fahrzeugsitz 1 weist dazu in Richtung der Längsachse x auf jeweils einer Fahrzeugsitzseite ein Schienenpaar 7 auf, welche jeweils eine Unterschiene 9 und eine gegenüber der Unterschiene 9 in Richtung der Längsachse x verschiebbare Oberschiene 11 aufweisen. Die Unterschiene 9 ist dabei fest mit dem Fahrzeug verbunden, wobei die Oberschiene 11 mit dem Fahrzeugsitz 1 verbunden ist.

Nachfolgend wird der erfindungsgemäße Längseinsteller 3 näher beschrieben. Dazu zeigen die Figuren 2 bis 8 den Längseinsteller 3 in verschiedenen Ansichten.

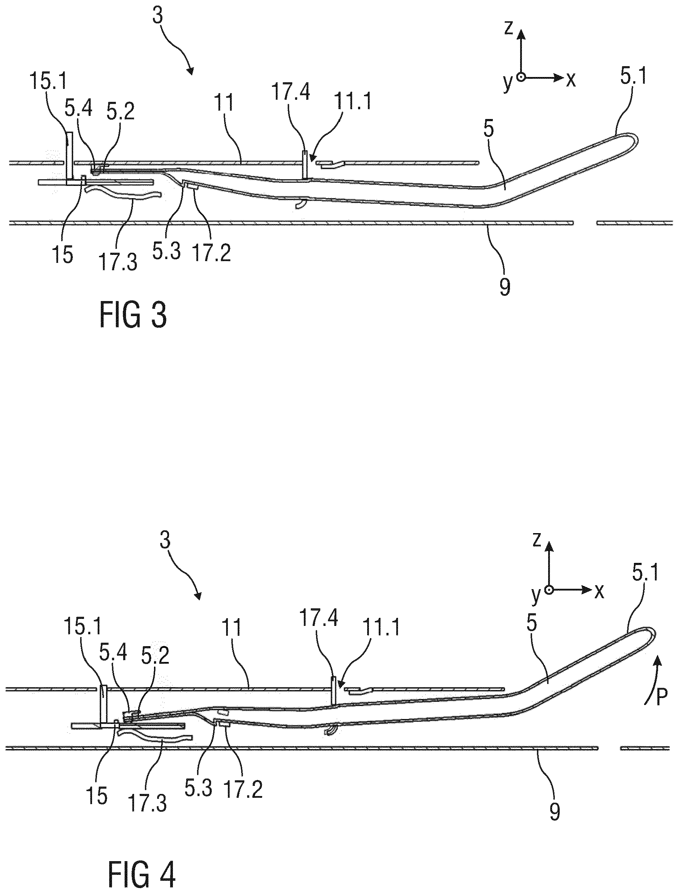

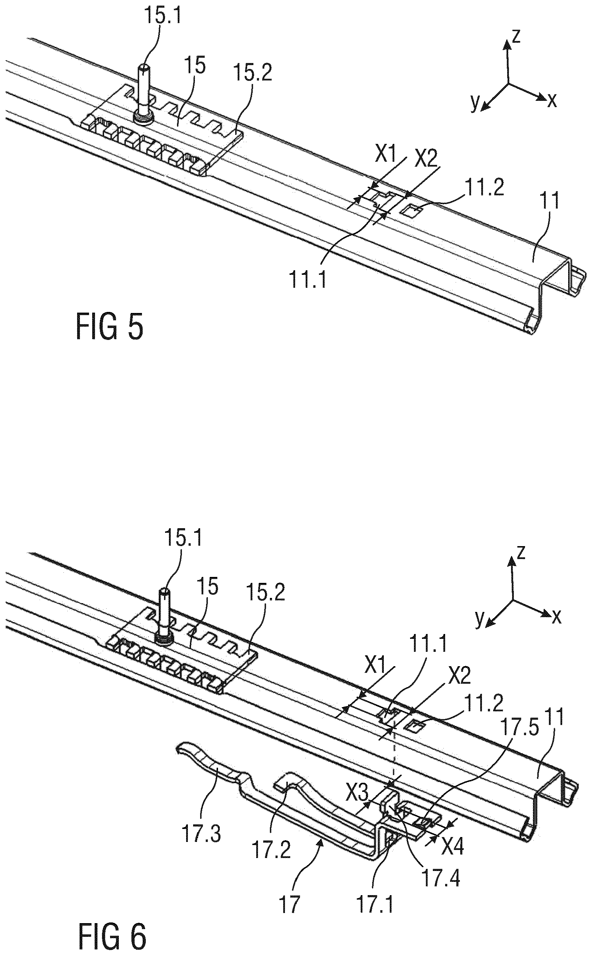

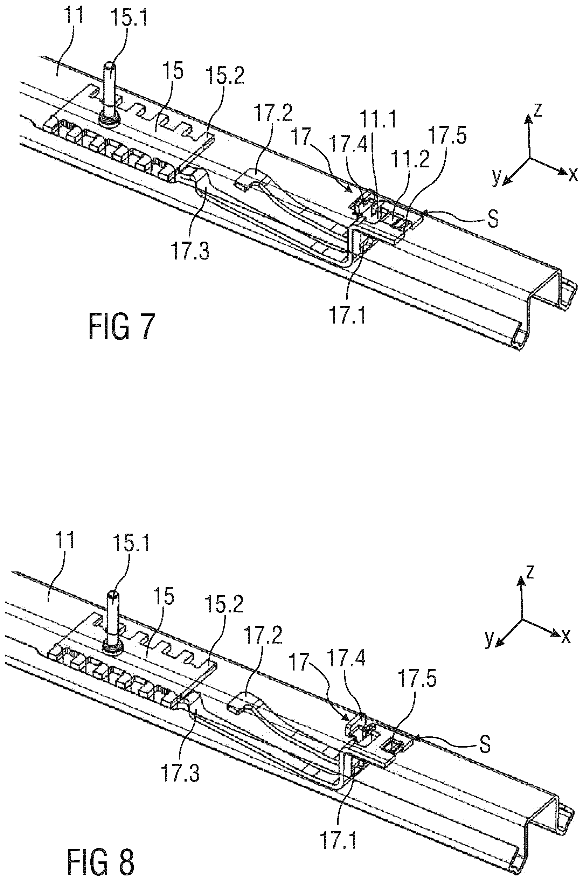

Insbesondere zeigt Figur 2 in perspektivischer, teiltransparenter Ansicht ein Ausführungsbeispiel für den Längseinsteller 3, wobei die Oberschiene 11 bereichsweise transparent dargestellt ist. Figur 3 zeigt in Seitenansicht eine Schnittdarstellung des Längseinstellers 3 in einem unbetätigten Zustand. Figur 4 zeigt schematisch in Seitenansicht eine Schnittdarstellung des Längseinstellers 3 in einem betätigtem Zustand. Figur 5 zeigt in perspektivischer, teiltransparenter Ansicht die Oberschiene 11, in welcher das Verriegelungselement 15 angeordnet ist. Figur 6 zeigt in perspektivischer, teiltransparenter Ansicht die in der Figur 5 dargestellte Oberschiene 11 vor einer Montage. Figur 7 zeigt in perspektivischer, teiltransparenter Ansicht die Oberschiene 11 während einer Montage und Figur zeigt in perspektivischer, teiltransparenter Ansicht die Oberschiene 11 nach der Montage.

Der Längseinsteller 3 umfasst das Schienenpaar 7 und eine Verriegelungseinheit 13.

Die Verriegelungseinheit 13 ist zur Arretierung der Oberschiene 11 ausgebildet und umfasst zumindest ein Federelement 17, ein Verriegelungselement 15 und das Betätigungselement 5.

Das Betätigungselement 5 ist an einem Betätigungsende 5.1 als ein nicht näher dargestellter Griff oder Bügel ausgebildet. An einem gegenüberliegenden Entriegelungsende 5.2 ist das Betätigungselement 5 als eine Betätigungszunge ausgebildet, welche in der Oberschiene 11, insbesondere zwischen dieser und dem Verriegelungselement 15, angeordnet ist.

Das Betätigungselement 5 ist an dem Federelement 17, insbesondere in einer in den Figuren 6 bis 8 gezeigten Durchgangsöffnung 17.1, derart angeordnet, dass das Betätigungselement 5 als eine Wippe gelagert ist. Somit verlagert sich bei Betätigung des Betätigungsendes 5.1 zur Entriegelung des Längseinstellers 3 das gegenüberliegende Entriegelungsende 5.2 in eine entgegengesetzte Richtung.

Das Verriegelungselement 15 ist in Form einer Verriegelungsplatte mit seitlichen rippenförmigen Rastausformungen 15.2 zur Arretierung der Oberschiene 11 ausgebildet. Das Verriegelungselement 15 ist dabei zwischen der Oberschiene 11 und der Unterschiene 9 positioniert. Zwischen der Oberschiene 11 und dem Verriegelungselement 15 ist das Entriegelungsende 5.2 angeordnet, wie zuvor bereits beschrieben. Das Verriegelungselement 15 umfasst weiterhin einen in Richtung der Hochachse z nach oben ragenden Führungszapfen 15.1, welcher durch eine Öffnung in der Oberschiene 11 (hier nicht explizit dargestellt) hindurchgeführt ist.

Das Federelement 17 ist gemäß dem vorliegenden Ausführungsbeispiel als eine Blattfeder ausgebildet und weist zwei Federarme 17.2, 17.3 auf, wobei ein Federarm 17.2 eine im Wesentlichen senkrechte Federkraft auf das Betätigungselement 5 ausübt. Die Federkraft wird vorliegend entlang der Hochachse z in Richtung des Fahrzeugsitzes 1 erzeugt. Eine mittels der Federkraft des Federarms 17.2 erzeugte Vorspannung des Betätigungselements 5 hält dieses in einer vorgegebenen Position, in welcher das Verriegelungselement 15 in einer Verriegelungsposition ist. In der Verriegelungsposition sind die seitlichen Rastausformungen 15.2 in Wirkeingriff mit in der Unterschiene 9 angeordneten Rastausnehmungen 9.1, die in Figur 2 teilweise dargestellt sind.

Ein anderer Federarm 17.3 übt eine im Wesentlichen senkrechte Federkraft auf das Verriegelungselement 15 aus, wobei die Federkraft das Verriegelungselement 15 in einer vorgegebenen Position hält, insbesondere in der Verriegelungsposition des Verriegelungselements 15. Die Federkraft wird vorliegend entlang der Hochachse z in Richtung des Fahrzeugsitzes 1 erzeugt.

Bei einer Entriegelung des Längseinstellers 3 wird das Betätigungselement 5, insbesondere das Entriegelungsende 5.2, betätigt und entlang der Hochachse z in Richtung des Fahrzeugsitzes 1 nach oben verlagert. Aufgrund dieser Verlagerung, insbesondere der Verlagerung des Entriegelungsendes 5.2, und der Ausbildung des Betätigungselements 5 als Wippe wirkt das Betätigungselement 5 der von dem Federarm 17.2 erzeugten Federkraft entgegen, wobei der Federarm 17.2 zusätzlich gespannt wird, so dass bei einem Loslassen des Betätigungsendes 5.1 dieses zurück in die ursprüngliche Position bewegbar ist.

Weiterhin bewirkt die Verlagerung des Betätigungsendes 5.1 entlang der Hochachse z nach oben in Richtung des Fahrzeugsitzes 1 eine Verlagerung des Entriegelungsendes 5.2 in entgegengesetzte Richtung, durch welche der Federkraft des Federarms 17.2 entgegengewirkt wird und das Verriegelungselement 15 in Richtung der Hochachse z nach unten bewegt wird.

Daraus resultierend wird der Wirkeingriff zwischen den Rastausformungen 15.2 und den Rastausnehmungen 9.1 gelöst und eine Längsbewegung der Oberschiene 11 relativ zur Unterschiene 9 freigegeben.

In der Entriegelungsposition ist der Federarm 17.3 zusätzlich gespannt, so dass beim Loslassen des Betätigungsendes 5.1 das Verriegelungselement 15 zurück in Richtung der Oberschiene 11 bewegt wird. Die Verriegelungsposition des Verriegelungselements 15 wird dabei dann erreicht, wenn die Rastausformungen 15.2 mit den Rastausnehmungen 9.1 verrasten.

In Figur ist das beispielsweise als Griff ausgebildete Betätigungsende 5.1 des Betätigungselements 5 derart positioniert, dass das Verriegelungselement 15 in der Verriegelungsposition ist.

Das Federelement 17 weist eine Rastnase 17.4 auf, welche in einer korrespondierenden Aussparung 11.1 in der Oberschiene 11 zur Ausbildung einer Steckverbindung angeordnet ist. Das Federelement 17 weist weiterhin eine Rastlasche 17.5 auf, welche in einer korrespondierenden weiteren Aussparung 11.2 in der Oberschiene 11 zur Ausbildung einer Rastverbindung und zur Fixierung einer Position der Rastnase 17.4 in der Aussparung 11.1 angeordnet ist. Die Rastnase 17.4 und die Rastlasche 17.5 bilden gemeinsam mit den korrespondierenden Aussparungen 11.1, 11.2 eine Steck-Rastverbindung S.

Das Betätigungselement 5 ist durch eine Durchgangsöffnung 17.1 hindurch geführt. Dabei ist das Betätigungselement 5 in nicht näher dargestellter Weise derart in der Durchgangsöffnung 17.1 gelagert, dass das Betätigungselement 5 als eine Wippe ausgebildet ist, wie bereits zuvor erwähnt. Weiterhin weist das Betätigungselement 5 in einem Bereich der Durchgangsöffnung 17.1 seitliche Anschläge auf (nicht gezeigt), um eine Lage des Betätigungselements 5 in dem Federelement 17 zu definieren und zu stabilisieren.

Zur Lagefixierung des Betätigungselements 5 zumindest in Richtung der Längsachse x umfasst dieses einen weiteren Anschlag 5.3, an welchem der Federarm 17.2 angeordnet ist. Aufgrund der mittels des Federarms 17.2 erzeugten Federkraft wird dieser an das Betätigungselement 5 gedrückt und eine stetige Anordnung am Anschlag 5.3 sichergestellt.

Der andere Federarm 17.3 übt die Federkraft entlang der Hochachse z in Richtung des Fahrzeugsitzes 1 auf das Verriegelungselement 15 aus, wodurch dieses in der gezeigten Position gehalten ist.

Das als Betätigungszunge ausgebildete Entriegelungsende 5.2 ist zwischen einer der Unterschiene 9 zugewandten Innenseite der Oberschiene 11 und dem Verriegelungselement 15 angeordnet. Das Verriegelungselement 15, auf welches die mittels des Federarms 17.3 erzeugte Federkraft ausgeübt wird, leitet diese Federkraft auf das Entriegelungsende 5.2 weiter, wodurch dieses an die Oberschiene 11 gedrückt wird. Um mechanische Geräusche bei einer Betätigung des Betätigungselements 5 zu minimieren, umfasst das Entriegelungsende 5.2 ein Dämpfungselement 5.4, beispielsweise ein Gummipfropfen oder eine Kunststoffbeschichtung oder eine Feder.

Zur Betätigung des Betätigungselements 5 und damit zur Entriegelung des Längseinstellers 3, wird das Betätigungsende 5.1 entlang der Hochachse z in Richtung des Fahrzeugsitzes 1 gemäß in Figur 4 gezeigtem Pfeil P verlagert.

Aufgrund der Verlagerung des Betätigungsendes 5.1 und der Ausbildung des Betätigungselements 5 als Wippe wirkt das Betätigungselement 5, insbesondere das Entriegelungsende 5.2, den von den Federarmen 17.2, 17.3 erzeugten Federkräften entgegen. Weiterhin bewirkt die Verlagerung des Betätigungsendes 5.1 entlang der Hochachse z in Richtung des Fahrzeugsitzes 1, dass das Entriegelungsende 5.2 in entgegengesetzte Richtung verlagert wird.

Das Verriegelungselement 15 wird dabei mittels des Entriegelungsendes 5.2 entlang der Hochachse z nach unten und damit in die Entriegelungsposition bewegt.

Nachfolgend wird die Verbindung zwischen dem Federelement 17 und der Oberschiene 11 näher erläutert.

Die Oberschiene 11 weist in einer in Richtung der Längsachse x verlaufenden Flanke die Aussparung 11.1 auf. Die Aussparung 11.1 ist im Wesentlichen T-förmig zur form- und kraftschlüssigen Aufnahme des hier nicht gezeigten Federelements 17 ausgebildet. Dabei weist die Aussparung 11.1 zwei Bereiche mit unterschiedlichen Breiten X1, X2 in Richtung der Querachse y auf, wobei die Breite X1 eines in Richtung der Längsachse x dem Verriegelungselement 15 zugewandten Bereichs kleiner ist als die Breite X2 des anderen Bereichs.

Eine weitere Aussparung 11.2 ist in Richtung der Längsachse x beabstandet zur Aussparung 11.1 angeordnet und ebenfalls zur form- und kraftschlüssigen Aufnahme des Federelements 17 vorgesehen.

Das Federelement 17 weist zur Lagefixierung derselben an der Oberschiene 11 eine Rastlasche 17.5 auf. Die Rastlasche 17.5 ist beispielsweise mittels Stanzen und anschließender Umformung hergestellt oder alternativ als ein vom Federelement 17 abragender Raststift oder als ein separater Raststift ausgebildet, der am Federelement 17 angeordnet, beispielsweise angeschweißt, ist. Die Rastlasche 17.5 weist dabei in Richtung der Querachse y eine mit der weiteren Aussparung 11.2 korrespondierende Breite auf.

Das Federelement 17 ist vorliegend einstückig ausgebildet, wobei die Rastnase 17.4 beispielsweise mittels Stanzen und anschließender Umformung geformt wurde. In einem nicht gezeigten Ausführungsbeispiel wird die Rastnase 17.4 mittels einer kraftschlüssigen und/oder formschlüssigen Verbindung angeordnet, beispielsweise angeschraubt.

Die Rastnase 17.4 erstreckt sich vertikal entlang der Hochachse z und ist im Wesentlichen T-förmig ausgebildet. Ein entlang der Hochachse z oberer breiter Abschnitt der Rastnase 17.4 weist dabei eine Breite X3 und ein unterer schmaler Abschnitt weist eine Breite X4 auf. Dabei korrespondieren die Breite X2 der Aussparung 11.1 mit der Breite X3 der Rastnase 17.4 und die Breite X1 der Aussparung 11.1 mit der Breite X4 der Rastnase 17.4.

Die Federarme 17.2, 17.3 erstrecken sich in entlang der Längsachse x und sind derart beabstandet zueinander ausgebildet, dass diese separate Federkräfte aufbringen können.

Der Federarm 17.2 ist an einem der Rastnase 17.4 gegenüberliegenden Ende derartig entlang der Querachse y abgewinkelt, dass ein Eingriff des Federarms 17.2 mit dem Anschlag 5.3 des Betätigungselements 5 herstellbar ist.

Der Federarm 17.3 ist an einem der Rastnase 17.4 gegenüberliegenden Ende derartig gewölbt ausgebildet, dass eine zusätzliche Federkraftwirkung auf das Verriegelungselement 15 erzielt ist.

In Figur 7 ist ein Montageschritt gezeigt, wobei das Federelement 17, insbesondere die Rastnase 17.4, in die Aussparung 11.1 der Oberschiene 11 eingeführt ist. Dabei ist der obere Bereich mit der Breite X3 der Rastnase 17.4 durch den breiten Bereich X2 der Aussparung 11.1 durchgeführt.

In Figur 8 ist der Längseinsteller 3 nach der Montage gezeigt, wobei das Federelement 17 aus einer in der Figur 7 gezeigten Position längs in Richtung des Verriegelungselements 15 verlagert wurde. Dabei ist die Rastnase 17.4 in die Aussparung 11.1 der Oberschiene 11 eingerastet. Der schmale Bereich der Rastnase 17.4 ist in den schmalen Bereich der Aussparung 11.1 geführt und die Rastlasche 17.5 ist in der weiteren Aussparung 11.2 eingerastet. Durch die Anordnung der Rastlasche 17.5 in der weiteren Aussparung 11.2 ist die Rastnase 17.4 in seiner Position fixiert.

Die beschriebene Anordnung des Federelements 17 an der Oberschiene 11 ist eine Steck-Rastverbindung S. Die Vorspannkräfte des Federelements 17 auf das Verriegelungselement 15 sowie auf das Betätigungselement 5 halten das Federelement 17 in der Oberschiene 11.

Von außen auf das Betätigungselement 5 wirkende Kräfte entlang der Hochachse z erzeugen mittels einer Einrastung des Federelements 17 in den in einer Ebene liegenden Aussparungen 11.1, 11.2 keine Drehmomente auf das Federelement 17. Zug- und Druckkräfte entlang der Längsachse x können vom Federelement 17 aufgenommen werden.

### Bezugszeichenliste

- 1: Fahrzeugsitz
- 3: Längseinsteller
- 5: Betätigungselement
- 5.1: Betätigungsende
- 5.2: Entriegelungsende
- 5.3: Anschlag
- 5.4: Dämpfungselement
- 7: Schienenpaar
- 9: Unterschiene
- 9.1: Rastausnehmung
- 11: Oberschiene
- 11.1: Aussparung
- 11.2: weitere Aussparung
- 13: Verriegelungseinheit
- 15: Verriegelungselement
- 15.1: Führungszapfen
- 15.2: Rastausformung
- 17: Federelement
- 17.1: Durchgangsöffnung
- 17.2: Federarm
- 17.3: Federarm
- 17.4: Rastnase
- 17.5: Rastlasche

- P: Pfeil
- S: Steck-Rastverbindung
- X1: Breite (Aussparung)
- X2: Breite (Aussparung)
- X3: Breite (Rastnase)
- X4: Breite (Rastnase)

- x: Längsachse
- y: Querachse
- z: Hochachse

## Patentansprüche

1. Längseinsteller (3) für einen Fahrzeugsitz (1) mit
- mindestens einem Schienenpaar (7), umfassend eine Unterschiene (9) und eine relativ zur Unterschiene (9) längs verschiebbare Oberschiene (11),
- zumindest eine Verriegelungseinheit (13) zum Arretieren der Oberschiene (11), und
- zumindest einem Betätigungselement (5) zum Lösen der Arretierung der Oberschiene (11),
- wobei die Verriegelungseinheit (13) zumindest ein Verriegelungselement (15) und zumindest ein Federelement (17) umfasst, die miteinander in Wirkeingriff stehen,
- wobei das Federelement (17) mit der Oberschiene (11) mittels einer Steck-Rastverbindung (S) form- und kraftschlüssig verbunden ist, und
- wobei das Federelement (17) das Betätigungselement (5) und das Verriegelungselement (15) mit einer Vorspannkraft beaufschlagt.

2. Längseinsteller (3) nach Anspruch 1, wobei das Federelement (17) zumindest eine Rastnase (17.4) und zumindest eine Rastlasche (17.5) aufweist, die zur Ausbildung der Steck-Rastverbindung (S) in korrespondierenden Aussparungen (11.1, 11.2) in der Oberschiene (11) anordenbar sind.

3. Längseinsteller (3) nach Anspruch 2, wobei die Rastnase (17.4) in eine korrespondierende Aussparung (11.1) einsteckbar und die Rastlasche (17.5) in einer anderen korrespondierenden Aussparung (11.2) verrastbar ist.

4. Längseinsteller (3) nach Anspruch 2 oder 3, wobei
- die mit der Rastnase (17.4) korrespondierende Aussparung (11.1) zwei Bereiche mit in Richtung einer Querachse (y) verschiedenen Breiten (X1, X2) aufweist und
- die Rastnase (17.4) zwei Abschnitte mit in Richtung einer Querachse (y) verschiedenen Breiten (X3, X4) aufweist.

5. Längseinsteller (3) nach Anspruch 4, wobei jeweils eine Breite (X1, X2) eines Bereichs der Aussparung (11.1) mit einer Breite (X3, X4) eines Abschnitts der Rastnase (17.4) korrespondieren.

6. Längseinsteller (3) nach einem der vorhergehenden Ansprüche, wobei
- das Federelement (17) zwei Federarme (17.2, 17.3) aufweist und
- ein Federarm (17.2) das Betätigungselement (5) mit einer Vorspannkraft beaufschlagt und der andere Federarm (17.3) das Verriegelungselement (15) mit einer Vorspannkraft beaufschlagt.

7. Längseinsteller 3 nach Anspruch 6 wenn rückbezogen auf einen der Ansprüche 2 bis 5,
wobei
- das Federelement (17) als eine Blattfeder ausgebildet ist und
- die Rastnase (17.4) und die Rastlasche (17.5) an einem stirnseitigen Ende und die Federarme (17.2, 17.3) an einem gegenüberliegenden stirnseitigen Ende des Federelements (17) angeordnet sind.

8. Längseinsteller (3) nach Anspruch 7, wobei einer der Federarme (17.2, 17.3) mit einem Anschlag (5.3) des Betätigungselements (5) in Wirkeingriff steht.

9. Längseinsteller (3) nach einem der vorhergehenden Ansprüche, wobei das Betätigungselement (5) schwenkbar in einer Durchgangsöffnung (17.1) des Federelements (17) gelagert ist.

10. Längseinsteller (3) nach einem der vorhergehenden Ansprüche, wobei ein Betätigungsende (5.1) des Betätigungselements (5) zwischen dem Verriegelungselement (15) und der Oberschiene (11) angeordnet ist.

11. Längseinsteller (3) nach einem der vorhergehenden Ansprüche, wobei das Verriegelungselement (15) zwischen der Oberschiene (11) und der Unterschiene (9) angeordnet ist und einen Führungszapfen (15.1) aufweist.

12. Fahrzeugsitz (1), umfassend zumindest einen Längseinsteller (3) nach einem der vorhergehenden Ansprüche.

## Claims

1. Longitudinal adjuster (3) for a vehicle seat (1), having
- at least one rail pair (7), comprising a lower rail (9) and an upper rail (11), which can be moved longitudinally relative to the lower rail (9),
- at least one locking unit (13) for locking the upper rail (11), and
- at least one actuating element (5) for releasing the locking of the upper rail (11),
- wherein the locking unit (13) comprises at least one locking element (15) and at least one spring element (17), which are in operative engagement with one another,
- wherein the spring element (17) is connected to the upper rail (11) in a form- and force-fitting manner by means of a plug-in/latching connection (S), and
- wherein the spring element (17) applies a preloading force to the actuating element (5) and to the locking element (15).

2. Longitudinal adjuster (3) according to Claim 1, wherein the spring element (17) has at least one latching nose (17.4) and at least one latching tab (17.5), which are arrangeable in corresponding apertures (11.1, 11.2) in the upper rail (11) to form the plug-in/latching connection (S).

3. Longitudinal adjuster (3) according to Claim 2, wherein the latching nose (17.4) can be inserted into a corresponding aperture (11.1), and the latching tab (17.5) can be latched in a different corresponding aperture (11.2).

4. Longitudinal adjuster (3) according to Claim 2 or 3, wherein
- the aperture (11.1) corresponding to the latching nose (17.4) has two regions with widths (X1, X2) that differ in the direction of a transverse axis (y), and
- the latching nose (17.4) has two sections with widths (X3, X4) that differ in the direction of a transverse axis (y).

5. Longitudinal adjuster (3) according to Claim 4, wherein a respective width (X1, X2) of one region of the aperture (11.1) corresponds to a width (X3, X4) of one section of the latching nose (17.4).

6. Longitudinal adjuster (3) according to one of the preceding claims, wherein
- the spring element (17) has two spring arms (17.2, 17.3), and
- one spring arm (17.2) applies a preloading force to the actuating element (5) and the other spring arm (17.3) applies a preloading force to the locking element (15).

7. Longitudinal adjuster (3) according to Claim 6 when related back to one of Claims 2 to 5, wherein
- the spring element (17) is designed as a leaf spring, and
- the latching nose (17.4) and the latching tab (17.5) are arranged at one face side end of the spring element (17), and the spring arms (17.2, 17.3) are arranged at an opposite face side end of the spring element (17).

8. Longitudinal adjuster (3) according to Claim 7, wherein one of the spring arms (17.2, 17.3) is in operative engagement with a stop (5.3) of the actuating element (5).

9. Longitudinal adjuster (3) according to one of the preceding claims, wherein the actuating element (5) is mounted pivotably in a through opening (17.1) of the spring element (17).

10. Longitudinal adjuster (3) according to one of the preceding claims, wherein an actuating end (5.1) of the actuating element (5) is arranged between the locking element (15) and the upper rail (11).

11. Longitudinal adjuster (3) according to one of the preceding claims, wherein the locking element (15) is arranged between the upper rail (11) and the lower rail (9) and has a guide peg (15.1).

12. Vehicle seat (1) comprising at least one longitudinal adjuster (3) according to one of the preceding claims.

## Revendications

1. Dispositif de réglage longitudinal (3) pour un siège de véhicule (1), comprenant
- au moins une paire de rails (7) comprenant un rail inférieur (9) et un rail supérieur (11) pouvant être déplacé longitudinalement par rapport au rail inférieur (9),
- au moins une unité de verrouillage (13) pour bloquer le rail supérieur (11), et
- au moins un élément d'actionnement (5) pour desserrer le blocage du rail supérieur (11),
- l'unité de verrouillage (13) comprenant au moins un élément de verrouillage (15) et au moins un élément de ressort (17), lesquels sont en prise fonctionnelle l'un avec l'autre,
- l'élément de ressort (17) étant connecté par engagement par correspondance de formes et par force au rail supérieur (11) au moyen d'une connexion par enfichage-encliquetage (S), et
- l'élément de ressort (17) sollicitant l'élément d'actionnement (5) et l'élément de verrouillage (15) avec une force de précontrainte.

2. Dispositif de réglage longitudinal (3) selon la revendication 1, dans lequel l'élément de ressort (17) présente au moins un ergot d'encliquetage (17.4) et au moins une patte d'encliquetage (17.5), qui peuvent être disposés dans des évidements correspondants (11.1, 11.2) dans le rail supérieur (11) pour réaliser la connexion par enfichage-encliquetage (S).

3. Dispositif de réglage longitudinal (3) selon la revendication 2, dans lequel l'ergot d'encliquetage (17.4) peut être enfiché dans un évidement correspondant (11.1) et la patte d'encliquetage (17.5) peut être encliquetée dans un autre évidement correspondant (11.2).

4. Dispositif de réglage longitudinal (3) selon la revendication 2 ou 3, dans lequel
- l'évidement (11.1) correspondant à l'ergot d'encliquetage (17.4) présente deux régions de largeurs (X1, X2) différentes dans la direction d'un axe transversal (y) et
- l'ergot d'encliquetage (17.4) présente deux portions de largeurs (X3, X4) différentes dans la direction d'un axe transversal (y).

5. Dispositif de réglage longitudinal (3) selon la revendication 4, dans lequel à chaque fois une largeur (X1, X2) d'une région de l'évidement (11.1) correspond à une largeur (X3, X4) d'une portion de l'ergot d'encliquetage (17.4).

6. Dispositif de réglage longitudinal (3) selon l'une quelconque des revendications précédentes, dans lequel
- l'élément de ressort (17) présente deux bras de ressort (17.2, 17.3) et
- un bras de ressort (17.2) sollicite l'élément d'actionnement (5) avec une force de précontrainte et l'autre bras de ressort (17.3) sollicite l'élément de verrouillage (15) avec une force de précontrainte.

7. Dispositif de réglage longitudinal (3) selon la revendication 6 lorsqu'elle se rapporte à l'une des revendications 2 à 5,
dans lequel
- l'élément de ressort (17) est réalisé sous forme de ressort à lame et
- l'ergot d'encliquetage (17.4) et la patte d'encliquetage (17.5) sont disposés à une extrémité frontale et les bras de ressort (17.2, 17.3) sont disposés à une extrémité frontale opposée de l'élément de ressort (17).

8. Dispositif de réglage longitudinal (3) selon la revendication 7, dans lequel l'un des bras de ressort (17.2, 17.3) est en prise fonctionnelle avec une butée (5.3) de l'élément d'actionnement (5) .

9. Dispositif de réglage longitudinal (3) selon l'une quelconque des revendications précédentes, dans lequel l'élément d'actionnement (5) est supporté de manière pivotante dans une ouverture de passage (17.1) de l'élément de ressort (17).

10. Dispositif de réglage longitudinal (3) selon l'une quelconque des revendications précédentes, dans lequel une extrémité d'actionnement (5.1) de l'élément d'actionnement (5) est disposée entre l'élément de verrouillage (15) et le rail supérieur (11).

11. Dispositif de réglage longitudinal (3) selon l'une quelconque des revendications précédentes, dans lequel l'élément de verrouillage (15) est disposé entre le rail supérieur (11) et le rail inférieur (9) et présente un tourillon de guidage (15.1).

12. Siège de véhicule (1), comprenant au moins un dispositif de réglage longitudinal (3) selon l'une quelconque des revendications précédentes.
